# EUROPÄISCHE PATENTSCHRIFT

(11) **EP 4 299 426 B1**
(45) Veröffentlichungstag und Bekanntmachung des Hinweises auf die Patenterteilung: **08.04.2026**
(21) Anmeldenummer: 23177215.3
(22) Anmeldetag: 05.06.2023
(51) Int. Cl.: B62K 19/34, B62M 6/55

(54) **ANTRIEBSANORDNUNG**
DRIVE ASSEMBLY
DISPOSITIF D'ENTRAÎNEMENT

(30) Priorität: 27.06.2022 DE 102022206432; 18.01.2023 DE 102023200344; 11.05.2023 DE 102023204385
(43) Veröffentlichungstag der Anmeldung: 03.01.2024
(73) Patentinhaber: Robert Bosch GmbH, 70442 Stuttgart (DE)
(72) Erfinder: Haeussermann, Conrad, 72818 Trochtelfingen (DE); Braun, Sigmund, 72127 Kusterdingen (DE); Kimmich, Peter, 71144 Steinenbronn (DE); Bertsch, Benjamin, 72805 Lichtenstein (DE); Holst, Stefan, 72760 Reutlingen (DE)

(56) Entgegenhaltungen:
- EP-A1- 3 960 605
- DE-A1- 102020 210 864
- GB-A- 2 084 525
- US-A1- 2021 197 926

## Beschreibung

### Stand der Technik

Die vorliegende Erfindung betrifft eine Antriebsanordnung und ein die Antriebsanordnung umfassendes Fahrzeug.

Bekannt sind Antriebsanordnungen mit zwischen zwei Wänden einer Rahmenschnittstelle gehaltenen Antriebseinheiten. Die Antriebseinheit wird üblicherweise mit den beiden gegenüberliegenden Wänden verschraubt. Üblicherweise ist dabei ein Spalt zwischen der Antriebseinheit und einer der Wände zu überbrücken. Beispielsweise wird auf die Druckschriften DE 10 2020 210864 A1, EP 3 960 605 A1, GB 2 084 525 A und US 2021/0197926 A1 verwiesen. Dokument DE102020210864A1 zeigt die Präambel des Anspruchs 1.

Zudem ist häufig eine Anpassung von Antriebseinheiten an verschiedenen Rahmenschnittstellen mit verschiedenen Geometrien erforderlich. Hierfür sind häufig aufwändige und kostenintensive Konstruktionen und Modifikationen erforderlich.

### Offenbarung der Erfindung

Die erfindungsgemäße Antriebsanordnung mit den Merkmalen des Anspruchs 1 zeichnet sich demgegenüber durch eine besonders einfache und kostengünstige Konstruktion aus, welche auf besonders einfache Weise eine Anpassung von Antriebseinheiten an verschiedene Fahrzeuggeometrien ermöglicht. Dies wird erreicht durch eine Antriebsanordnung, umfassend eine Antriebseinheit, die zumindest einen Befestigungsbereich aufweist, wobei die Antriebseinheit am Befestigungsbereich zwei gegenüberliegende Öffnungen aufweist. Die beiden Öffnungen erstrecken sich jeweils entlang einer Befestigungsachse. Insbesondere sind die beiden Öffnungen auf der Befestigungsachse an gegenüberliegenden Seiten der Antriebseinheit angeordnet. Zudem umfasst die Antriebsanordnung jeweils eine Hülse pro Öffnung. Jede der Hülsen ist in eineder Öffnungen der Antriebseinheit eingesteckt. Außerdem umfasst die Antriebsanordnung zumindest einen Adapter, insbesondere jeweils einen Adapter pro Hülse. Der Adapter ist dabei auf einer, insbesondere jeder, der Hülsen angeordnet und eingerichtet, um eine Verbreiterung der Antriebseinheit am Befestigungsbereich und entlang einer Richtung der Befestigungsachse bereitzustellen. Der Adapter weist einen Haltebereich auf, der den Flansch der Hülse umgibt

Mit anderen Worten wird eine Antriebseinheit bereitgestellt, welche über zwei beidseitig in Öffnungen der Antriebseinheit eingesteckte Hülsen an einem Befestigungsbereich befestigbar ist. Beispielsweise kann die Antriebseinheit am Befestigungsbereich, und insbesondere mittels der Hülsen, an einer Rahmenschnittstelle des Fahrzeugs befestigbar ausgebildet sein. Dabei ist zumindest ein Adapter vorgesehen, welcher auf zumindest einer Hülse angeordnet ist. Es können auch zwei Adapter vorgesehen sein, wobei jeweils ein Adapter auf einer der beiden Hülsen angeordnet werden kann. Der Adapter kann dabei eine Breite der Antriebseinheit am Befestigungsbereich anpassen. Insbesondere bildet der Adapter somit ein Distanzelement, welches eine Außenabmessung der Antriebseinheit am Befestigungsbereich erhöht, im Vergleich zu einer Konfiguration ohne Adapter.

Die Antriebsanordnung bietet somit den Vorteil, dass mittels des oder der zusätzlichen Adapter auf besonders einfache und kostengünstige Weise eine Anbindungsbreite der Antriebseinheit angepasst werden kann. Dies ist besonders vorteilhaft, wenn die Antriebseinheit zwischen zwei relativ zueinander starr angeordneten Wänden einer Rahmenschnittstelle angeordnet und an diesen Wänden befestigt werden soll. Dabei kann mittels der Adapter besonders einfach eine optimale Einbaulage der Antriebseinheit sichergestellt werden. Zudem kann beispielsweise durch Weglassen oder durch Austausch der Adapter eine Breite der Antriebseinheit an verschiedene Rahmenschnittstellen angepasst werden. Dabei ist der Adapter insbesondere derart formstabil ausgebildet, dass eine Dicke des Adapters ein festes Maß aufweist. Indem die Dicke des Adapters ein festes Maß aufweist, kann auf besonders einfache und kostengünstige Weise die Anbindungsbreite der Antriebseinheit angepasst werden. Die Breite der Antriebseinheit kann auf verschiedene Rahmenschnittstellen angepasst werden, indem je nach Rahmenschnittstelle ein oder zwei Adapter mit einer entsprechenden Dicke zum Einsatz kommen. Als ein formstabiler Adapter, welcher eine Dicke mit einem festen Maß aufweist, ist im Rahmen der vorliegenden Erfindung ein Adapter zu verstehen, welcher vor und nach dem Einbau an der Antriebseinheit und der Rahmenschnittstelle dieselbe definierte Dicke aufweist.

Die Unteransprüche haben bevorzugte Weiterbildungen der Erfindung zum Inhalt.

Bevorzugt weist jede Hülse einen Schaft und einen Flansch auf. Der Schaft jeder Hülse ist dabei zumindest teilweise innerhalb der entsprechenden Öffnung der Antriebseinheit angeordnet, wobei der Flansch jeder Hülse außerhalb der entsprechenden Öffnung angeordnet ist. Insbesondere kann der Flansch scheibenförmig ausgebildet sein, und eingerichtet sein, um im vollständig in die Öffnung der Antriebseinheit eingesteckten Zustand an der Außenseite der Antriebseinheit anzuliegen. Der Adapter ist dabei an einer dem Schaft gegenüberliegenden Flansch-Außenseite des Flansches angeordnet. Insbesondere kann der Adapter somit als zusätzliches Element zur Verdickung des Flansches angesehen werden. Damit kann eine besonders einfache und kostengünstige Anordnung bereitgestellt werden.

Besonders bevorzugt weist der, insbesondere jeder, Adapter einen scheibenförmigen Grundbereich auf, welcher, insbesondere im auf der Hülse angeordneten Zustand, an der Flansch-Außenseite des Flansches der entsprechenden Hülse anliegt. Vorzugsweise ist der Grundbereich als Scheibe mit zwei zueinander parallelen ebenen Flächen ausgebildet, und weist bevorzugt eine Durchgangsöffnung auf. Damit kann eine besonders einfache Konstruktion des Adapters bereitgestellt werden.

Erfindungsgemäß weist der Adapter den Haltebereich auf, der, insbesondere im auf der Hülse angeordneten Zustand, den Flansch der Hülse umgibt. Beispielsweise kann der Haltebereich als zylindrischer, vom Bereich vorstehender Bereich ausgebildet sein. Damit kann eine besonders stabile Anordnung des Adapters auf der Hülse bei gleichzeitig einfacher und kostengünstiger Konstruktion bereitgestellt werden.

Weiter bevorzugt ist zwischen dem Haltebereich des Adapters und dem Flansch der entsprechenden Hülse eine Pressverbindung ausgebildet. Insbesondere ist der Adapter somit auf den Flansch der Hülse aufgepresst. Dadurch können eine präzise relative Positionierung und eine zuverlässig haltende Verbindung von Adapter und Hülse bereitgestellt werden.

Besonders bevorzugt weist jede Hülse ein Dämpfungselement auf, welches an einer der Antriebseinheit zugewandten Seite des Flansches angeordnet ist. Zusätzlich ist das Dämpfungselement an einer radial äußeren Seite des Flansches angeordnet, das heißt, derart, dass das Dämpfungselement den Flansch radial außen umgibt. Insbesondere ist das Dämpfungselement somit in radialer Richtung zwischen dem Haltebereich des Adapters und dem Flansch der Hülse angeordnet. Bevorzugt ist die Pressverbindung dabei zwischen dem Dämpfungselement der Hülse und dem Haltebereich des Adapters ausgebildet. Das Dämpfungselement ist dabei aus einem schwingungsdämpfenden Material gebildet. Bevorzugt ist das Dämpfungselement aus einem Elastomer gebildet. Das Dämpfungselement bildet dabei eine gewisse Dämpfungswirkung durch eine elastische Verformbarkeit zwischen Flansch und Antriebseinheit, sowie in radialer Richtung zwischen Flansch und Adapter. Dadurch kann die Antriebsanordnung auf einfache und kostengünstige Weise so ausgelegt werden, dass die Antriebseinheit beispielsweise spielfrei in axialer Richtung der Öffnungen gehalten wird, indem das Dämpfungselement verformt bzw. auf Druck teilweise verpresst wird. Zusätzlich kann das Dämpfungselement eine Übertragung von Schwingungen und Vibrationen zwischen Antriebseinheit und Rahmenschnittstelle reduzieren. Außerdem bewirkt das Dämpfungselement vorteilhafterweise eine Dichtwirkung zwischen Hülse und Antriebseinheit.

Vorzugsweise umgibt das Dämpfungselement zusätzlich den Schaft zumindest teilweise, bevorzugt vollständig, in Umfangsrichtung. Insbesondere ist das Dämpfungselement somit als Umspritzung des Schafts, der dem Schaft zugewandten Seite des Flansches, und der radial äußeren Seite des Flansches ausgebildet. Das Dämpfungselement bietet somit den Vorteil einer schwingungsmechanisch optimierten Befestigbarkeit der Antriebseinheit an der Rahmenschnittstelle. Dies wirkt sich besonders vorteilhaft auf eine Haltbarkeit von Verschraubungen aus, da insbesondere durch die schwingungsdämpfende Wirkung eine Übertragung von Schwingungen und Vibrationen sowie wechselnder dynamischer Lasten aufgrund der federnden und dämpfenden Eigenschaften des Dämpfungselements verringert werden. Somit wird auch eine wechselnde mechanische Belastung der Schraubverbindung verringert oder verhindert, wodurch eine hohe Haltbarkeit bereitgestellt werden kann. Zudem kann dadurch beispielsweise ein Auftreten ungewollter Geräusche reduziert werden. Zudem bietet sich der Vorteil eines zusätzlichen Schutzes vor Korrosion, insbesondere galvanischer Korrosion, beispielsweise wenn die Antriebseinheit ein Gehäuse aus Magnesium oder Aluminium aufweist, wobei die Hülsen beispielsweise aus Stahl gebildet sind. Zudem kann eine axiale und radiale Dichtwirkung an der Antriebseinheit bereitgestellt werden.

Bevorzugt weist der, insbesondere jeder, Adapter an einer der Hülse abgewandten Adapter-Außenseite eine Vielzahl an vorstehenden Formschlusselementen auf. Vorzugsweise sind die Formschlusselemente so ausgebildet, um sich bei einer Verschraubung der Antriebseinheit mit einer Wand in diese Wand einzudrücken. Insbesondere bewirken die Formschlusselemente durch das Eindrücken in die Wand einen Formschluss in einer zur Befestigungsachse senkrechten Ebene. Das heißt, der Adapter weist an dessen Adapter-Außenseite die vorstehenden Formschlusselemente auf, die sich beim Verschrauben der Antriebseinheit mit der Wand teilweise in die Wand eingraben, insbesondere um in der Ebene der Wandoberfläche einen Mikro-Formschluss zusätzlich zu dem aus der Verschraubung resultierenden Kraftschluss zu erzeugen. Dadurch kann die Möglichkeit einer besonders festen Verschraubbarkeit der Antriebseinheit mit einer Rahmenschnittstelle eines Fahrzeugs bereitgestellt werden, da ein Rutschen zwischen Adapter und Wand durch die Formschlusselemente zuverlässig verhindert werden kann.

Weiter bevorzugt weist der Flansch jeder Hülse an der dem Schaft abgewandten Flansch-Außenseite eine Vielzahl an vorstehenden Formschlusselementen auf. Vorzugsweise sind die Formschlusselemente des Schafts so ausgebildet, um sich bei einer Verschraubung der Antriebseinheit mit einer Wand in diese Wand einzudrücken, insbesondere wenn kein Adapter an dieser Hülse vorgesehen ist. Insbesondere bewirken die Formschlusselemente dadurch einen Formschluss in einer zur Befestigungsachse senkrechten Ebene. Damit kann eine besonders feste Verschraubbarkeit auch ohne zusätzlichen Adapter bereitgestellt werden.

Bevorzugt ist der Adapter zweiteilig ausgebildet und umfasst einen Grundkörper und ein Einlegeelement. Der Grundkörper entspricht dabei vorzugsweise dem scheibenförmigen Grundbereich des Adapters. Die Formschlusselemente sind dabei, vorzugsweise ausschließlich, am Einlegeelement angeordnet. Das heißt, das Einlegeelement mit den Formschlusselementen wird als separates Bauteil zum restlichen Adapter bereitgestellt. Dadurch ergeben sich insbesondere fertigungstechnische Vorteile, da eine signifikant höhere Flexibilität in der Geometrie und Materialwahl von Adapter und Formschlusselementen ermöglicht wird. Bevorzugt ist das Einlegeelement unbeweglich an dem Grundkörper fixiert.

Vorzugsweise ist das Einlegeelement als Hülse ausgebildet und weist einen Adapterschaft und einen Adapterflansch auf. Der Adapterschaft ist dabei in eine Durchgangsöffnung des Grundkörpers des Adapters eingesteckt. Vorzugsweise erstreckt sich der Adapterflansch ausgehend vom Adapterschaft scheibenförmigen nach radial außen weg. Die Formschlusselemente sind dabei am Adapterflansch, insbesondere an einer Adapterflansch-Außenseite, die auf einer der entsprechenden an den Adapter angrenzenden Hülse gegenüberliegenden Seite angeordnet ist. Vorzugsweise ist zwischen Adapterschaft und Durchgangsöffnung des Grundkörpers des Adapters eine Pressverbindung ausgebildet. Durch ein hülsenförmiges Einlegeelement kann eine besonders einfache und kostengünstige Herstellung ermöglicht werden zudem kann durch eine große Kontaktfläche zwischen Einlegeelement und Grundbereich des Adapters eine optimale Kraftübertragung und -Verteilung ermöglicht werden.

Besonders bevorzugt ist der Flansch der Hülse zweiteilig ausgebildet und umfasst einen Grundkörper und ein Einlegeelement. Der Grundkörper ist vorzugsweise zusammen mit dem Schaft der Hülse gemeinsam als ein einstückiges Bauteil ausgebildet. Die Formschlusselemente sind dabei, vorzugsweise ausschließlich, am Einlegeelement angeordnet. Das heißt, das Einlegeelement mit den Formschlusselementen wird als separates Bauteil zur restlichen Hülse bereitgestellt. Dadurch ergeben sich insbesondere fertigungstechnische Vorteile, da eine signifikant höhere Flexibilität in der Geometrie und Materialwahl von Hülse und Formschlusselementen ermöglicht wird. Bevorzugt ist das Einlegeelement unbeweglich an dem Grundkörper fixiert.

Vorzugsweise ist das Einlegeelement in einer, insbesondere ringförmigen, Aussparung, welche insbesondere als Nut ausgebildet ist, des Grundkörpers angeordnet. Dadurch ergibt sich eine einfache und genau definierte relative Anordnung von Einlegeelement und Grundkörper zur optimalen Positionierung der Formschlusselemente. Bevorzugt ist das Einlegeelement dabei mittels eines axialen Formschlusses in der Aussparung gehalten. Das heißt, in axialer Richtung des Adapters bzw. der Hülse hinterschneiden sich zumindest Teilbereiche von Einlegeelement und Grundkörper derart, dass das Einlegeelement zuverlässig in der Aussparung gehalten ist. Beispielsweise kann der axiale Formschluss in Form einer Verstemmung, beispielsweise durch plastisch verformte Teilbereiche, des Grundkörpers ausgebildet sein. Somit kann eine einfache und kostengünstige Herstellung ermöglicht werden.

Bevorzugt sind der Grundkörper und das Einlegeelement aus unterschiedlichen Materialien gebildet. Besonders vorteilhaft ist es, wenn das Einlegeelement eine größere Härte als der Grundkörper aufweist. Vorzugsweise ist der Grundkörper des Flansches der Hülse, sowie bevorzugt auch der Schaft der Hülse, aus einem Stahl gebildet, der sich gut für eine Kaltumformung eignet. Dadurch kann eine einfache und kostengünstige Herstellbarkeit der Hülsen ermöglicht werden. Der Adapter kann alternativ bevorzugt aus Aluminium gebildet sein. Damit kann eine besonders einfache und kostengünstige Herstellbarkeit des Adapters ermöglicht werden. Weiter bevorzugt ist das Einlegeelement aus einem gehärteten Stahl gebildet. Dadurch kann eine besonders beständige Geometrie der Formschlusselemente bereitgestellt werden, wodurch dessen Funktion besonders zuverlässig erreicht wird.

Besonders bevorzugt sind die Adapter-Außenseite und die Flansch-Außenseite identisch ausgebildet. Insbesondere weisen dabei sowohl Flansch-Außenseite, als auch Adapter-Außenseite jeweils eine Vielzahl an Formschlusselementen auf. Somit kann eine besonders hohe Flexibilität der Antriebsanordnung bereitgestellt werden, wobei in jeglicher Konfiguration auf einfache Weise und ohne zusätzliche Modifikationen eine zuverlässige Verschraubung mit einer Rahmenschnittstelle eines Fahrzeugs ermöglicht wird.

Weiter bevorzugt weist der Adapter an einer dem Flansch zugewandten Adapter-Innenseite mindestens eine Ausnehmung auf, welche so ausgebildet und eingerichtet ist, um im auf der Hülse angeordneten Zustand die vorstehenden Formschlusselemente des Flansches der Hülse aufzunehmen. Beispielsweise kann der Adapter pro Formschlusselement des Flansches jeweils eine separate Ausnehmung aufweisen, oder alternativ zumindest eine Ausnehmung, welche mehrere Formschlusselemente des Flansches aufnehmen kann. Dadurch kann eine einfache und leichtgängige Verbindbarkeit von Flansch und Hülse ermöglicht werden, wobei eine Verformung des Adapters vermieden werden kann. Dadurch können vorteilhafterweise Hülse und Adapter jeweils aus einem harten Material, wie beispielsweise Stahl, gebildet sein.

Besonders bevorzugt ist die mindestens eine Ausnehmung als eine Ringnut ausgebildet. Dadurch kann eine besonders einfache Konstruktion des Adapters bereitgestellt werden. Besonders vorteilhaft ist eine Ausnehmung als Ringnut, wenn die Formschlusselemente der Hülse auf einem Kreisring angeordnet sind.

Vorzugsweise weist jedes Formschlusselement, insbesondere von Adapter und/oder Hülse, eine vorstehende Pyramide auf. Insbesondere steht die Pyramide von der Adapter-Außenseite bzw. der Flansch-Außenseite vor. Alternativ bevorzugt weist jedes Formschlusselement beispielsweise einen vorstehenden Kegel auf. Mit anderen Worten sind eine Vielzahl an von der Oberfläche des Adapters und/oder des Flansches vorstehenden Pyramidenspitzen als Formschlusselemente vorgesehen. Besonders bevorzugt sind die Pyramiden dabei spitz ausgebildet, und weisen insbesondere einen Öffnungswinkel von weniger als 60°, bevorzugt weniger als 45° auf, sodass diese besonders leicht in die Wand einer Rahmenschnittstelle eindringen können. Eine derartige Ausgestaltung mit Spitzenpyramiden als Formschlusselementen ist besonders vorteilhaft bei der Verschraubung der Antriebseinheit an Carbonrahmen, das heißt, an Rahmenschnittstellen, welche zumindest teilweise aus einem faserverstärkten, bevorzugt kohlefaserverstärkten, Kunststoff bestehen. Hierbei ergibt sich der Vorteil, dass die spitzen Pyramiden sich in die Netzstruktur des Carbons einprägen können, ohne diese zu beschädigen. Insbesondere werden die Fasern beim Eindringen der Pyramiden nicht unterbrochen, sondern können ausweichen und sich um die jeweilige Pyramide herumlegen.

Weiter bevorzugt weist jedes Formschlusselement eine an die Pyramide angrenzende Vertiefung, insbesondere in der Adapter-Außenseite und/oder der Flansch-Außenseite, auf. Vorzugsweise ist die Vertiefung als ringförmige Nut ausgebildet. Besonders bevorzugt ist eine einzelne Vertiefung in der Oberfläche des Adapters bzw. des Flansches ausgebildet, wobei an der radialen Innenseite und/oder Außenseite der ringförmigen Nut die mehreren Pyramiden angeordnet sind. Alternativ bevorzugt kann pro Pyramide eine separate Vertiefung ausgebildet sein, wobei die Vertiefung insbesondere unmittelbar an die Pyramide angrenzend angeordnet ist. Durch die Vertiefung kann beispielsweise durch das Eindringen in die Wand beim Verschrauben verdrängtes Material der Wand aufgenommen werden, um eine zuverlässige und definierte Anlage der Oberfläche des entsprechenden Elements an der Wand zu ermöglichen.

Bevorzugt umfasst die Antriebsanordnung ferner eine Rahmenschnittstelle mit einer ersten Wand und einer zweiten Wand. Die erste Wand und die zweite Wand können bevorzugt mittels einer Verbindungswand, beispielsweise U-förmig, einstückig miteinander verbunden sein. Die Antriebseinheit ist mittels zumindest eines Befestigungselements und mittels der Hülsen an jeder der beiden Wände gehalten. Beispielsweise kann das Befestigungselement als eine Schraube ausgebildet sein, welche in die Hülsen eingeschraubt, oder durch die Hülsen durchgesteckt ist. Besonders vorteilhaft ist es, wenn die Antriebseinheit eine Durchgangsbohrung aufweist, wobei die beiden Öffnungen stirnseitige Enden der Durchgangsbohrung sind. In diesem Fall ist das Befestigungselement vorteilhafterweise ein Durchgangsbolzen, der durch die Durchgangsbohrung sowie durch beide Hülsen durchgesteckt ist. Damit kann eine besonders einfache und zugleich robuste Befestigung der Antriebseinheit an der Rahmenschnittstelle erfolgen.

Besonders bevorzugt ist das Befestigungselement an der zweiten Wand befestigt, beispielsweise in die zweite Wand eingeschraubt. Das Befestigungselement ist dabei an der ersten Wand axial beweglich gehalten. Insbesondere ist das Befestigungselement an der ersten Wand in radialer Richtung, insbesondere im Wesentlichen, unbeweglich gehalten, beispielsweise indem das Befestigungselement zumindest teilweise innerhalb einer Durchgangsöffnung der ersten Wand angeordnet ist. Dadurch kann auf besonders einfache und effektive Weise ein Toleranzausgleich und/oder ein Ausgleich von beispielsweise temperaturbedingten Längenänderungen erfolgen.

Weiter bevorzugt verspannt das Befestigungselement die beiden Hülsen und den Adapter gegen die zweite Wand. Insbesondere spannt das Befestigungselement die beiden Hülsen zwischen einem Bolzenkopf des Befestigungselements und der zweiten Wand ein. Dadurch kann auf besonders einfache Weise ein Toleranzausgleich zwischen der Rahmenschnittstelle mit den beiden Wänden und der Antriebseinheit erfolgen, da die axial bewegliche Halterung des Befestigungselements an der ersten Wand als Loslager wirkt, während die Befestigung an der zweiten Wand als Festlager wirkt.

Besonders bevorzugt umfasst das Befestigungselement einen Bolzen mit einem Bolzenkopf und einem Bolzenschaft. Der Bolzenkopf ist dabei derart ausgebildet, um einen Spalt zwischen der ersten Wand und der ersten Hülse zu überbrücken. Vorzugsweise umfasst die Antriebsanordnung dabei nur genau einen Adapter auf der Seite der zweiten Wand. Mit anderen Worten wird ein Längenausgleich zwischen den beiden Wänden auf der Festlager-Seite der zweiten Wand durch den Adapter und auf der Loslager-Seite der ersten Wand durch eine entsprechende Verlängerung oder Verkürzung des Bolzenkopfes bereitgestellt. Damit kann eine besonders einfache und kostengünstige Konstruktion der Antriebsanordnung mit wenigen Bauteilen bereitgestellt werden.

Vorzugsweise ist die Antriebseinheit mittels, bevorzugt genau, zwei Befestigungsbereichen an den Wänden der Rahmenschnittstelle gehalten. Dabei sind die Adapter an einem der beiden Befestigungsbereiche, oder alternativ an beiden Befestigungsbereichen angeordnet. Beispielsweise kann durch eine Ausgestaltung mit Adaptern an beiden Befestigungsbereichen vorteilhafterweise eine schmale Antriebseinheit in verschiedenen Rahmenschnittstellen mit größerer Breite eingebaut werden.

Bevorzugt ist eine, vorzugsweise minimale und/oder maximale, Breite der Rahmenschnittstelle zwischen der ersten Wand und der zweiten Wand an einem ersten Befestigungsbereich größer als an einem zweiten Befestigungsbereich. Die Adapter sind dabei, insbesondere ausschließlich, am ersten Befestigungsbereich angeordnet. Bevorzugt beträgt die maximale Breite am zweiten Befestigungsbereich maximal 90 %, bevorzugt maximal 80 %, besonders bevorzugt maximal 70 % der maximalen Breite am ersten Befestigungsbereich. Dadurch kann eine optimal an unterschiedliche Einsatzzwecke angepasste Geometrie der Rahmenschnittstelle bereitgestellt werden. Beispielsweise erlaubt ein breiter erster Befestigungsbereich, vorzugsweise in Fahrtrichtung vorne, eine besonders stabile Konstruktion. Vorteilhafterweise kann dadurch die Bereitstellung eines breiten Unterrohrs des Fahrzeugs erleichtert werden, was sich besonders vorteilhaft auf eine einfache Montage einer Batterie im Unterrohr des Fahrzeugs ermöglicht.

Weiterhin führt die Erfindung zu einem Fahrzeug, bevorzugt einem mit Muskelkraft und/oder Motorkraft betreibbaren Fahrzeug, vorzugsweise einem Elektrofahrrad, welches die beschriebene Antriebsanordnung umfasst. Die Rahmenschnittstelle kann beispielsweise Teil eines Fahrzeugrahmens des Fahrzeugs sein.

Bevorzugt umfasst das Fahrzeug einen Fahrzeugrahmen. Die Rahmenschnittstelle der Antriebsanordnung ist dabei integraler Bestandteil des Fahrzeugrahmens, das heißt der Fahrzeugrahmen ist mit der Rahmenschnittstelle als ein einstückiges Bauteil ausgebildet, wobei die Antriebseinheit bevorzugt direkt, also insbesondere ohne zusätzliche dazwischen liegende Bauteile mit der Rahmenschnittstelle verbunden ist. Alternativ bevorzugt ist die Rahmenschnittstelle der Antriebsanordnung und/oder eine oder beide der Wände der Rahmenschnittstelle als ein separates Bauteil zum Fahrzeugrahmen ausgebildet und mit dem Fahrzeugrahmen verbunden, vorzugsweise verschraubt. Beispielsweise kann somit eine indirekte Befestigung der Antriebseinheit an der Rahmenschnittstelle erfolgen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einer Antriebsanordnung gemäß einem ersten Ausführungsbeispiel der Erfindung,
- Figur 2: eine Detail-Schnittansicht einer Antriebseinheit der Antriebsanordnung der Figur 1,
- Figur 3: eine Schnittansicht der Antriebsanordnung der Figur 1 in vollständig verschraubtem Zustand,
- Figur 4: eine perspektivische Detail-Schnittansicht eines Adapters der Antriebsanordnung der Figur 1,
- Figur 5: eine weitere Ansicht des Adapters der Figur 4,
- Figur 6: eine perspektivische Ansicht einer Hülse der Antriebsanordnung der Figur 1,
- Figur 7: eine weitere Schnittansicht der Antriebsanordnung der Figur 1,
- Figur 8: eine Detail-Schnittansicht der Antriebsanordnung der Figur 1,
- Figur 9: eine weitere Detail-Schnittansicht der Antriebsanordnung der Figur 1,
- Figur 10: eine Detail-Schnittansicht einer Antriebsanordnung gemäß einem zweiten Ausführungsbeispiel der Erfindung,
- Figur 11: eine perspektivische Ansicht des Details der Figur 10,
- Figur 12: eine Detail-Schnittansicht einer Antriebsanordnung gemäß einem dritten Ausführungsbeispiel der Erfindung und
- Figur 13: eine Schnittansicht einer Antriebsanordnung gemäß einem vierten Ausführungsbeispiel der Erfindung.

### Bevorzugte Ausführungsformen der Erfindung

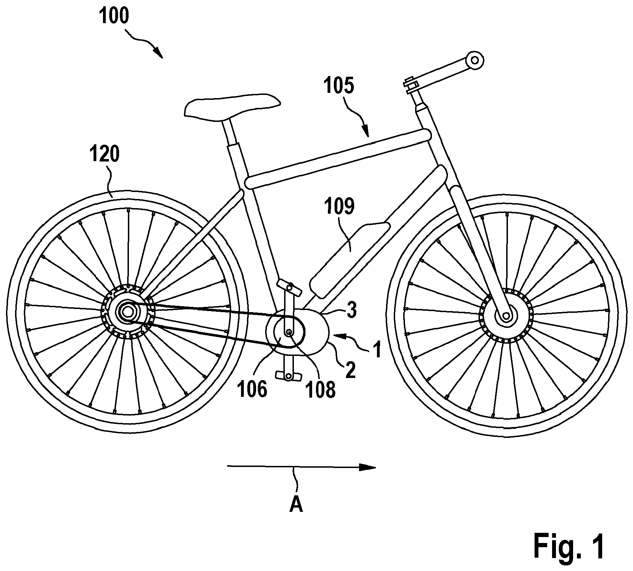

Figur 1 zeigt eine vereinfachte schematische Ansicht eines mit Muskelkraft und/oder Motorkraft betreibbaren Fahrzeugs 100, welches eine Antriebsanordnung 1 gemäß einem ersten Ausführungsbeispiel der Erfindung umfasst. Bei dem Fahrzeug 100 handelt es sich um ein Elektrofahrrad. Die Antriebsanordnung 1 ist im Bereich eines Tretlagers angeordnet und umfasst eine Antriebseinheit 2.

Die Antriebseinheit 2 umfasst einen Elektromotor und ein Getriebe und ist vorgesehen, um mittels eines durch den Elektromotor erzeugten Drehmoments eine mittels Muskelkraft erzeugte Tretkraft des Fahrers motorisch zu unterstützen. Die Antriebseinheit 2 wird dabei von einem elektrischen Energiespeicher 109 des Fahrzeugs 100 mit elektrischer Energie versorgt.

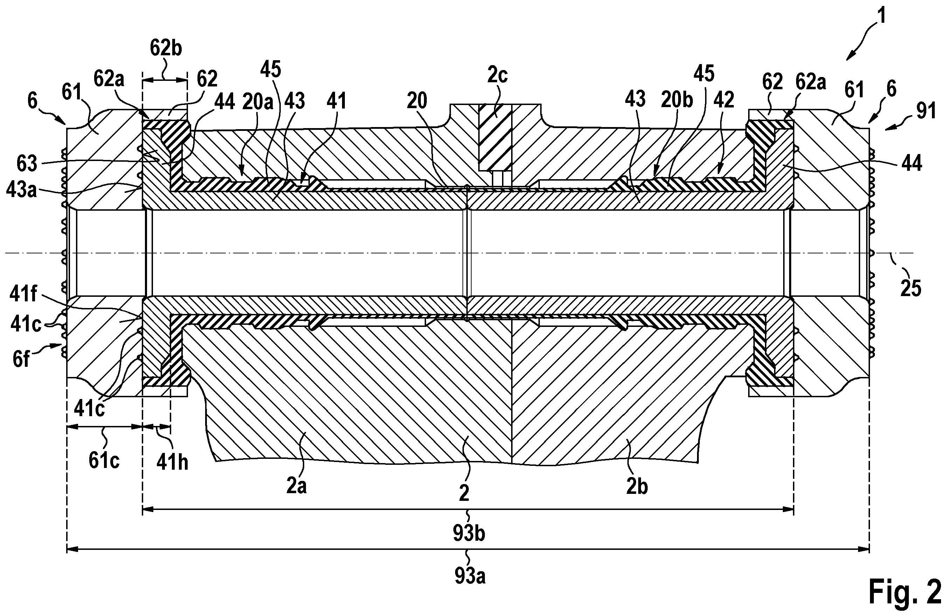

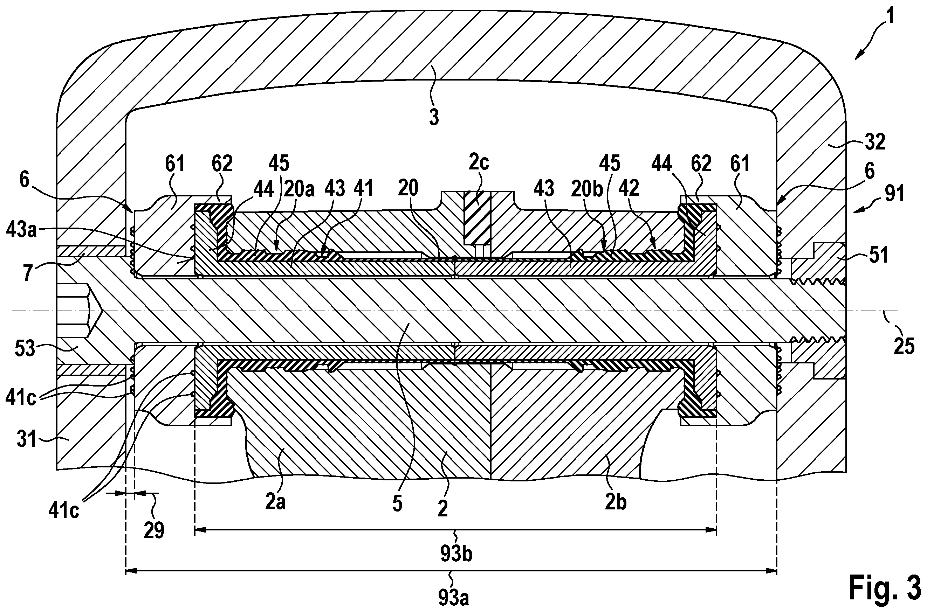

Details der Antriebsanordnung 1 des ersten Ausführungsbeispiels sind in Schnittansichten in den Figuren 2 und 3 dargestellt.

Die Antriebseinheit 2 umfasst bevorzugt ein Gehäuse, welches mehrteilig ausgebildet ist mit einem ersten Gehäuseteil 2a und einem zweiten Gehäuseteil 2b. Zwischen den beiden Gehäuseteilen 2a, 2b ist eine Dichtung 2c angeordnet, zur Abdichtung gegenüber einem Fluideintritt in die Antriebseinheit 2.

Die Antriebseinheit 2 umfasst ferner zwei gegenüberliegende Öffnungen 20a, 20b, welche sich jeweils entlang einer Befestigungsachse 25 erstrecken. Die beiden Öffnungen 20a, 20b sind dabei beidseitige Endbereiche einer Durchgangsöffnung 20, die sich entlang der Befestigungsachse 25 vollständig durch die Antriebseinheit 2 erstreckt.

Zudem umfasst die Antriebsanordnung 1 zwei Hülsen 41, 42, die jeweils von außerhalb in eine der Öffnungen 20a, 20b eingesteckt sind.

Die beiden Hülsen 41, 42 sind bevorzugt identisch ausgebildet. Alternativ können die beiden Hülsen 41, 42 auch unterschiedlich ausgebildet sein. Jede Hülse 41, 42 weist einen Schaft 43, der hohlzylindrisch ausgebildet ist, und einen Flansch 44, der als ringförmige Scheibe ausgebildet ist auf. Der Schaft 43 ist dabei zumindest teilweise innerhalb der entsprechenden Öffnung 20a, 20b der Antriebseinheit 2 angeordnet. Der Flansch 44 ist jeweils außerhalb der entsprechenden Öffnung 20a, 20b angeordnet.

Jede Hülse 41, 42 weist ferner ein Dämpfungselement 45 auf, welches eine radiale Außenseite des Schafts 43 vollständig umgibt, und welches außerdem an einer dem Schaft 43 zugewandten Seite des Flansches 44 sowie an einer radial äußeren Seite des Flansches 44 angeordnet ist. Das Dämpfungselement 45 ist dabei aus einem schwingungsdämpfenden Material, insbesondere einem Elastomer, gebildet. Vorzugsweise ist das Dämpfungselement 45 als eine Umspritzung der Hülse 41, 42 ausgebildet.

Wie in der Figur 2 und 3 zu erkennen, stehen die Hülsen 41, 42 jeweils nur mittels des Dämpfungselements 45 in Kontakt mit der Antriebseinheit 2. Dadurch ergibt sich der Vorteil einer schwingungsentkoppelten Halterung der Antriebseinheit 2 an einer Rahmenschnittstelle 3 des Fahrzeugs 100. Neben einer Verhinderung oder Reduzierung einer Übertragung von akustischen Schwingungen, was sich vorteilhaft auf eine Reduzierung von Geräuschen beim Betrieb des Fahrzeugs 100 auswirkt, wird auch eine Übertragung mechanischer Schwingungen reduziert oder verhindert. Dadurch kann eine schädigende Wirkung derartiger Schwingungen auf die Verschraubung verhindert oder reduziert werden. Das heißt, ein Lockern oder Aufarbeiten der Schraubenverbindung kann verhindert oder reduziert werden. Zudem kann durch die Elastizität der Dämpfungselemente 45 selbst ein gewisser Toleranzausgleich erfolgen. Ferner erlauben die elastischen Dämpfungselemente 45 eine besonders zuverlässige fluiddichte Abdichtung zwischen Hülsen 41, 42 und Antriebseinheit 2 an der Durchgangsbohrung 20.

Die Antriebsanordnung 1 umfasst in der vorliegenden Ausführungsform ferner jeweils einen Adapter 6 für jede in der Figur 2 und 3 dargestellte Hülse 41, 42. Die beiden Adapter 6 in den Figuren 2 bzw. 3 sind dabei identisch ausgebildet. In einer alternativen, nicht dargestellten Ausführungsform können die beiden Adapter 6 auch unterschiedlich ausgebildet sein. In einer weiteren alternativen, nicht dargestellten Ausführungsform ist nur eine der beiden Hülsen 41, 42 mit einem Adapter 6 versehen.

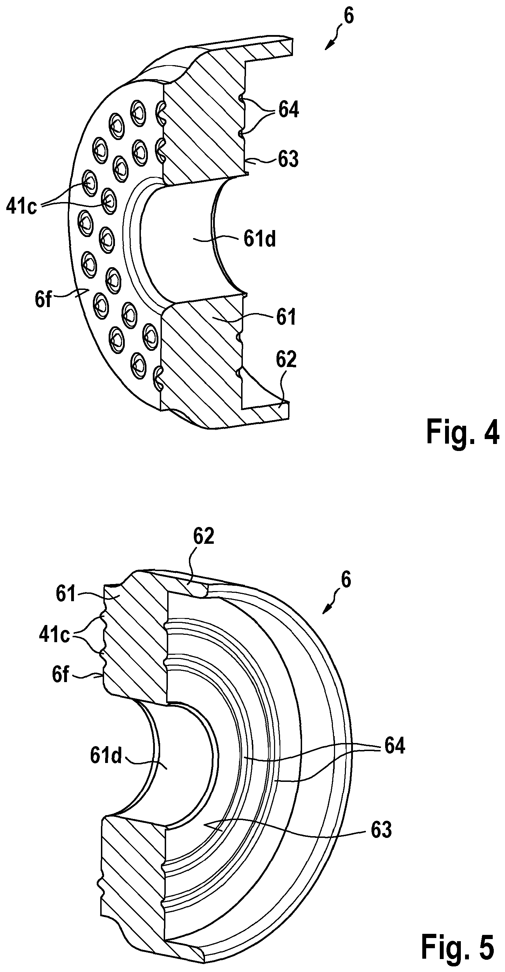

Im Detail ist ein solcher Adapter 6 in einer perspektivischen Schnittansicht in den Figuren 4 und 5 dargestellt. Der Adapter 6 ist bevorzugt aus demselben Material wie Flansch 44 und Schaft 43 der Hülsen 41, 42 ausgebildet, bevorzugt Stahl. Der Adapter 6 umfasst einen scheibenförmigen Grundbereich 61, der eine mittige Durchgangsöffnung 61d aufweist. Zudem weist der Adapter 6 einen Haltebereich 62 auf, der sich vom Grundbereich 61 ausgehend in axialer Richtung erstreckt und als holzylindrischer Ring ausgebildet ist.

Der Adapter 6 ist dabei vorgesehen, um auf der Hülse 41, 42, im Detail einer bezüglich der Befestigungsachse 25 stirnseitigen Flansch-Außenseite 41f angeordnet zu werden. Dadurch kann der Adapter 6 eine Verbreiterung der Antriebseinheit 2 entlang der Richtung der Befestigungsachse 25 bereitstellen. Details der Anordnung und Konstruktion des Adapters 6 werden nachfolgend im Detail näher beschrieben.

Der Adapter 6 weist in axialer Richtung eine erste Dicke 61c auf, welche mindestens einer zweiten Dicke 41h des Flansches 44 der Hülse 41, 42 entspricht. Bevorzugt beträgt die erste Dicke 61c mindestens das 1,5-fache, vorzugsweise mindestens das Doppelte, besonders bevorzugt etwa das 2,7-fache, der zweiten Dicke 41h. Der Adapter ist derart formstabil ausgebildet, dass die Dicke 61c des Adapters 6 ein festes Maß aufweist.

Mittels des Haltebereichs 62 ist der Adapter 6 auf den Flansch 44 der entsprechenden Hülse 41, 42 aufsteckbar, wobei eine Pressverbindung 62a zwischen dem Flansch 44 und dem Haltebereich 62 ausgebildet ist. Bevorzugt weist der Haltebereich 62 in axialer Richtung eine vorbestimmte Höhe 62b auf, welche größer ist als die zweite Dicke 41 h des Flansches 44. Insbesondere ist die Pressverbindung 62a zwischen dem den Flansch 44 umgebenden Teil des Dämpfungselements 45 und dem Haltebereich 62 ausgebildet.

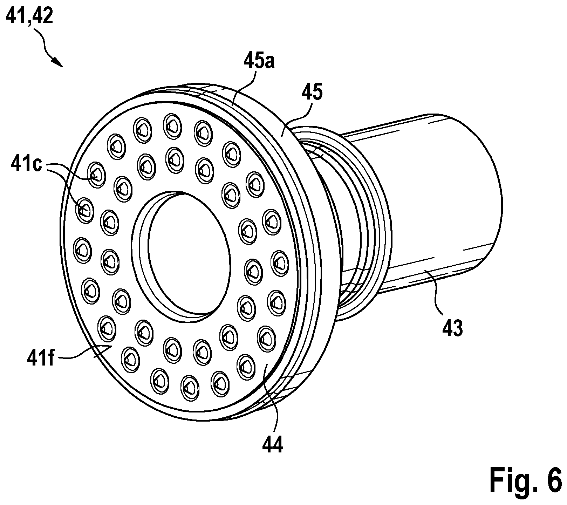

Wie in der Figur 6, welche eine perspektivische Ansicht einer einzelnen Hülse 41, 42 zeigt, kann am Dämpfungselement 45 im Bereich des Flansches 44 eine nach radial außen vorstehende umlaufende Rippe 45a vorgesehen sein, wodurch eine besonders einfache und genau definierte Pressverbindung 62a herstellbar ist.

Wenn der Adapter 6 auf den Flansch 44 der Hülse 41, 42 aufgesteckt ist, stehen Adapter-Innenseite 63 und eine Flansch-Außenseite 41f in Flächenkontakt miteinander. Zudem sind sämtliche Öffnungen, nämliche die Öffnungen 20a, 20b, der Antriebseinheit 2, die Öffnungen 61d der Adapter 6, und Öffnungen der Hülsen 41, 42, im zusammengesteckten Zustand miteinander fluchtend angeordnet.

Die beiden Adapter 6 bewirken dabei, wie in der Figur 2 dargestellt, eine Verbreiterung der Antriebseinheit 2. Im Detail wird eine maximale Breite der Antriebseinheit 2 am Befestigungsbereich 91 erhöht. In einer Konfiguration ohne Adapter 6 entspricht die maximale Breite einer ersten Breite 93b, welche durch einen axialen Abstand der Flansch-Außenseiten 41f der beiden Hülsen 41, 42 definiert ist. Durch die beiden Adapter 6 kann diese maximale Breite der Antriebseinheit 2 auf eine zweite Breite 93a erhöht werden, welche durch einen axialen Abstand der Adapter-Außenseiten 6f der beiden Adapter 6 definiert ist. Dabei weisen die beiden Adapter 6 jeweils eine Dicke 93c auf.

In Figur 3 ist die Antriebseinheit 2 im an der Rahmenschnittstelle 3 des Fahrzeugs 100 montierten Zustand dargestellt. Die Antriebsanordnung 1 umfasst dabei ferner die U-förmige Rahmenschnittstelle 3, innerhalb der die Antriebseinheit 2 teilweise aufgenommen ist (vergleiche Figur 3). Die Rahmenschnittstelle 3 ist ein integraler Bestandteil eines Fahrzeugrahmens 105 des Fahrzeugs 100 (vgl. Figur 1). Die Rahmenschnittstelle 3 weist dabei eine erste Wand 31 und eine zweite Wand 32 auf, zwischen welchen ein Teil der Antriebseinheit 2 angeordnet ist.

Die Befestigung der Antriebseinheit 2 an der Rahmenschnittstelle 3 erfolgt dabei mittels eines Durchgangsbolzens 5. Der Durchgangsbolzen 5 ist durch die beiden Adapter 6, durch die beiden Hülsen 41, 42, und durch die Antriebseinheit 2 hindurchgesteckt und in eine Mutter 51 an der zweiten Wand 32 eingeschraubt. An der ersten Wand 31 ist ein Bolzenkopf 53 des Durchgangsbolzens 5 in axialer Richtung beweglich und in radialer Richtung unbeweglich mittels eines Toleranzausgleichselements 7 gehalten. Beispielsweise kann das Toleranzausgleichselement 7 zumindest teilweise als Gleitlagerbuchse ausgebildet sein.

Die Verschraubung ist dabei so ausgebildet, dass der Durchgangsbolzen 5 die Anordnung aus Antriebseinheit 2, Hülsen 41, 42 und Adaptern 6 gegen die zweite Wand 32 verspannt. Durch die axiale bewegliche Halterung des Bolzenkopfes 53 relativ zur ersten Wand 31 kann ein Spalt 29 zwischen erster Wand 31 und dem Adapter 6 auf der linken Seite überbrückt werden. Der Adapter 6 auf der rechten Seite wird durch die Verschraubung gegen die erste Wand 31 gepresst.

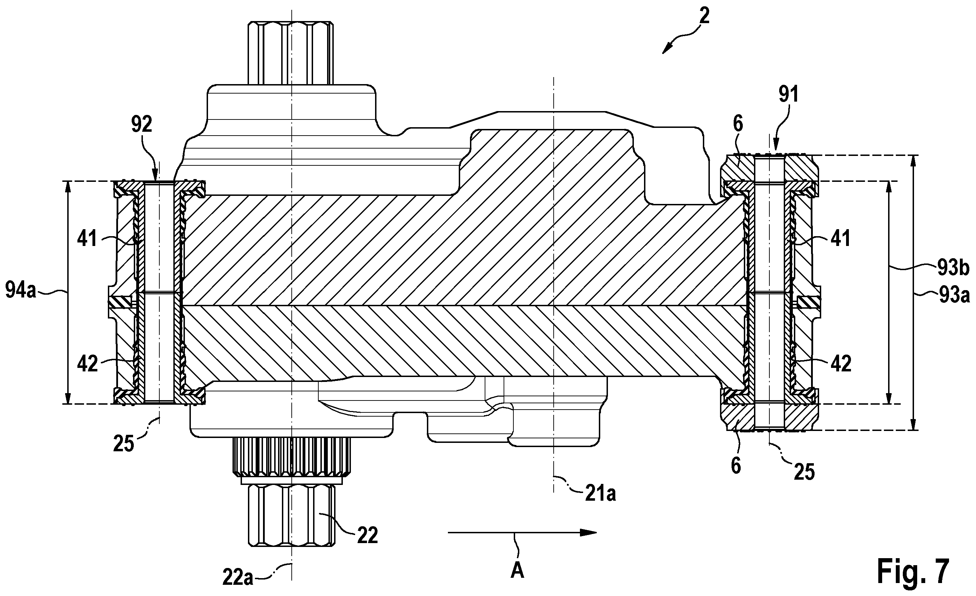

Die Verschraubung der Antriebseinheit 2 mit der Rahmenschnittstelle 3 erfolgt an insgesamt zwei Befestigungsbereichen 91, 92 an den beiden Wänden 31, 32 der Rahmenschnittstelle 3. Dies ist beispielhaft in der Figur 7 dargestellt, welche eine alternative Schnittansicht der Antriebseinheit 2 der Figur 2 zeigt.

In der Figur 7 sind zudem eine Motorachse 21a, um welche beispielsweise ein Rotor des Elektromotors rotierbar angeordnet ist, und eine Abtriebsachse 22a, um welche eine Abtriebswelle 22 der Antriebseinheit 2 rotierbar angeordnet ist, dargestellt. Motorachse 21a und Kurbelachse 22a und die beiden Befestigungsachsen 25 der Befestigungsbereiche 91, 92 sind parallel zueinander.

Wie in Figur 7 dargestellt, können ausschließlich am ersten Befestigungsbereich 91 Adapter 6 vorgesehen sein, um die maximale Breite 93a der Antriebseinheit 2 an diesem Befestigungsbereich 91 zu erhöhen. Am zweiten Befestigungsbereich 92 sind in dem in der Figur 7 dargestellten Ausführungsbeispiel keine Adapter 6 vorgesehen, sodass die maximale Breite 94a an diesem Befestigungsbereich 92 allein durch die Hülsen 41, 42 definiert ist. Alternativ bevorzugt ist auch eine genau umgekehrte Anordnung möglich, das heißt mit Adaptern 6 am zweiten Befestigungsbereiche 91, und ohne Adapter 6 am ersten Befestigungsbereich 91. Gemäß einer weiteren alternativen Ausgestaltung können auch an beiden Befestigungsbereichen 91, 92 jeweils Adapter vorgesehen sein.

Dadurch kann eine Antriebseinheit 2 bereitgestellt werden, welche an beiden Befestigungsbereichen 91, 92 dieselbe Breite aufweist. Durch Anordnen der zusätzlichen Adapter 6 auf den Hülsen 41, 42 kann dabei die Breite bedarfsgerecht erhöht werden, um ohne Modifikation der Antriebseinheit 2 selbst eine optimale mechanische Anbindung an unterschiedliche Rahmenschnittstellen 3 zu ermöglichen.

Besonders vorteilhaft ist es, wenn, wie in der Figur 7 dargestellt, am ersten Befestigungsbereich 91, der in Fahrtrichtung A vor dem zweiten Befestigungsbereich 92 liegt, zwei Adapter 6 angeordnet sind, und am zweiten Befestigungsbereich 92 keine. Dadurch kann die Antriebseinheit 2 vorteilhaft an einer Rahmenschnittstelle 3 montiert werden, die an einem entsprechenden in Fahrtrichtung A vorne liegenden Anbindungsbereich eine größere Breite zwischen der ersten Wand 31 und der zweiten Wand 32 aufweist als an einem in Fahrtrichtung A hinten liegenden Anbindungsbereich.

Eine weitere vorteilhafte Ausgestaltung der Hülsen 41, 42 und der Adapter 6, welche eine besonders zuverlässige und mechanisch feste Montage der Antriebseinheit 2 an der Rahmenschnittstelle 3 erlauben, wird nachfolgend insbesondere in Bezug auf die Figuren 4 bis 6 und 8 und 9 beschrieben.

Der Flansch 44 der Hülse 41 weist an der Flansch-Außenseite 41f eine Vielzahl an vorstehenden Formschlusselementen 41c auf. Bevorzugt sind die Formschlusselemente 41c in einem oder mehreren, wie in der Figur 6 dargestellt bevorzugt zwei, zur Durchgangsöffnung der Hülse 41 konzentrischen Kreisen angeordnet.

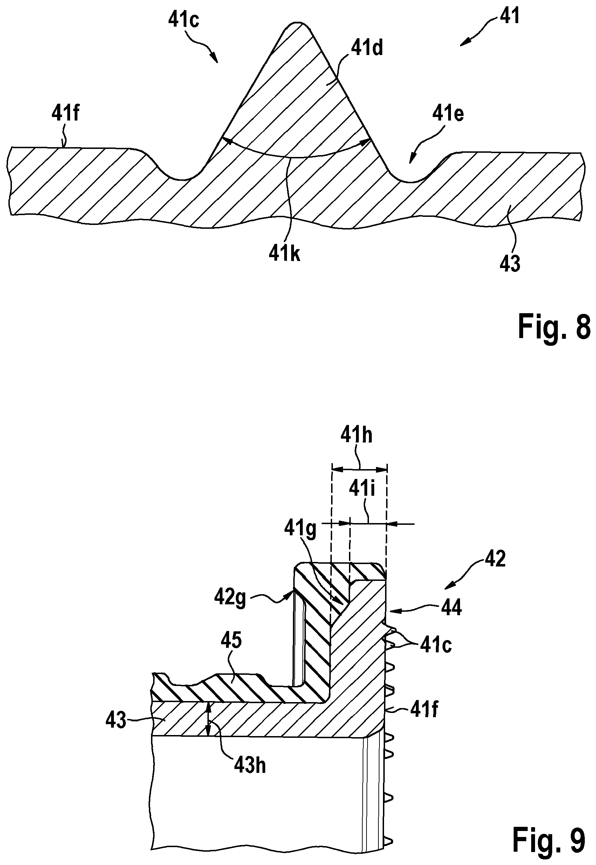

Ein einzelnes Formschlusselement 41c der Hülse 41 ist in einer Detail-Schnittansicht in der Figur 8 dargestellt. Jedes Formschlusselement 41c weist eine von einer Oberfläche 41f des Flansches 44 vorstehende Pyramide 41d auf. Alternativ bevorzugt kann jedes Formschlusselement 41c auch einen vorstehenden Kegel aufweisen. Die Pyramide 41d ist als gerade Pyramide ausgebildet und weist einen Öffnungswinkel 41k von vorzugsweise weniger als 60° auf. Die Pyramiden 41d bewirken dabei, dass sich (für den Fall ohne Adapter 6, das heißt, wenn die Hülse 41 direkt an der Innenseite der zweiten Wand 32 anliegen kann) die Pyramiden 41d beim Verschrauben in die Oberfläche der zweiten Wand 32 eindrücken, also die Oberfläche plastisch verformen. Dadurch wird ein Mikro-Formschluss zwischen Hülse 41 und zweiter Wand 32 in einer zur Schraubenachse senkrechten Ebene erzeugt, wodurch eine besonders feste Verbindung von Antriebseinheit 2 und Rahmenschnittstelle 3 miteinander ermöglicht werden kann. Ein Rutschen der Antriebseinheit 2 relativ zur Rahmenschnittstelle 3 kann damit zuverlässig verhindert werden.

Jedes Formschlusselement 41c weist dabei zusätzlich zu der Pyramide 41d, jeweils eine Vertiefung 41e auf, die an einem Außenumfang der Pyramide 41d und in der Oberfläche 41f des Flansches 44 ausgebildet ist. Die Vertiefung 41e kann beispielsweise durch das Eindringen der Pyramide 41d in die Wand 32 verdrängtes Material der Wand 32 aufnehmen, sodass Wand 32 und Flansch 44 zuverlässig präzise plan aufeinander aufliegen können. Beispielsweise kann pro Pyramide 41d jeweils eine separate Vertiefung 41e vorgesehen sein, die die Pyramide 41d teilweise oder vollständig umgibt. Alternativ bevorzugt kann eine einzelne Vertiefung 41e in der Oberfläche 41f des Flansches 44 ausgebildet sein, an deren radialer Innenseite und/oder Außenseite die Pyramiden 41d angeordnet sind.

Analog der Konstruktion der Flansch-Außenseite 41 f mit Formschlusselementen 41c weist die Adapter-Außenseite 6f jedes Adapters 6 eine Vielzahl an vorstehenden Formschlusselementen 41c auf (vgl. Figur 4 und 5). Ausgestaltung und Funktionsweise der Formschlusselemente 41c an der Adapter-Außenseite 41f entsprechen dabei der eben beschriebenen Ausgestaltung und Funktionsweise der Formschlusselemente 41c an der Flansch-Außenseite 41f.

Der Adapter 6 weist zusätzlich an der Adapter-Innenseite 63, welche in Kontakt mit der Flansch-Außenseite 41f steht, zwei als Ringnut ausgebildete Aussparungen 64 auf. Die Aussparungen 64 sind dabei derart ausgebildet und angeordnet, dass diese im auf die Hülse 41, 42 aufgesteckten Zustand die Formschlusselemente 41c des Flansches 44 der Hülse 41, 42 aufnehmen können. Mit anderen Worten wird dadurch erreicht, dass sich die Formschlusselemente 41c des Flansches 44 nicht in den Adapter 6 eindrücken, sondern dass ein Flächenkontakt zwischen Adapter 6 und Flansch 44 vorliegt. Dadurch kann bei einfacher und kostengünstiger Konstruktion ein einfacher Zusammenbau und eine hohe Flexibilität der Anordnung bereitgestellt werden.

Alternativ zu den beiden separaten als Ringnuten ausgebildeten Aussparungen 64 kann beispielsweise auch eine einzelne Ringnut vorgesehen sein, innerhalb der im aufgesteckten Zustand des Adapters 6 sämtliche Formschlusselemente 41c der jeweiligen Hülse 41, 42 aufgenommen sind.

Die Flansch-Außenseite 41f und die Adapter-Außenseite 6f sind dabei identisch ausgebildet. Dadurch kann eine besonders einfache und vorteilhafte Konstruktion der Antriebsanordnung 1 bereitgestellt werden, welche bei einer Verschraubung der Antriebseinheit 2 mit der Rahmenschnittstelle 3 sowohl bei einer Verwendung von Adapter 6, als auch wenn diese weggelassen werden, stets dieselben mechanischen Eigenschaften der Verschraubung bereitstellen kann. Dadurch kann die Antriebseinheit 2 besonders kosteneffizient ohne aufwendige konstruktive Anpassungen, beispielsweise des Gehäuses, an Rahmenschnittstellen 3 mit verschiedenen Geometrien verwendet werden. Durch Bereitstellen der Adapter 6 und/oder Ersatz durch Adapter 6 anderer Dicken kann eine besonders einfache und kostengünstige Anpassung der Anbindung erfolgen.

Figur 9 zeigt eine weitere Detail-Schnittansicht einer Antriebsanordnung 1 des ersten Ausführungsbeispiels der Erfindung. Dabei weist die Hülse 42 an einem radial äußeren Ende des Flansches 44 eine Verjüngung 41g auf der dem Schaft 43 zugewandten Seite des Flansches 44 auf. Die Verjüngung 41g ist dabei derart ausgebildet, dass eine Differenz der maximalen Dicke 41 h und einer minimalen Dicke 41i des Flansches 44 mindestens 50 %, bevorzugt maximal 250 %, besonders bevorzugt 200 %, einer Wandstärke 43h des Schafts 43 der Hülse 42 entspricht. Die Dicken werden dabei entlang einer Richtung parallel zur einer Längsachse der Hülse 42 betrachtet.

Das Dämpfungselement 45 ist dabei derart ausgebildet, dass dieses die Verjüngung 41g des Flansches 44 kompensiert. Zusätzlich weist das Dämpfungselement 45 an einem radial äußersten Ende eine Verdickung 42g auf. Dadurch liegt am radial äußeren Ende des Flansches 44 ein besonders dickes Dämpfungselement 42 vor. Dies wirkt sich vorteilhaft auf eine optimale Abdichtung zwischen Hülse 42 und Antriebseinheit 2 aus.

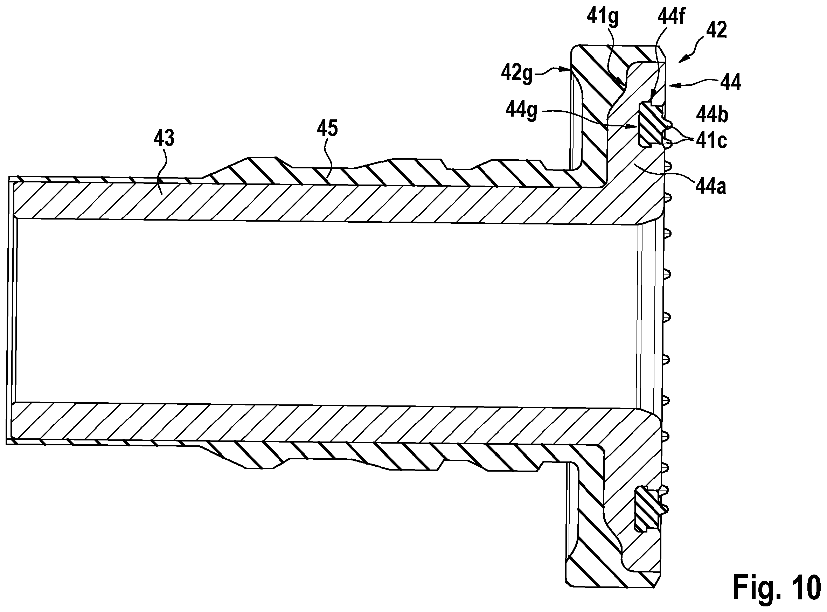

Figur 10 zeigt eine Detail-Schnittansicht einer Antriebsanordnung 1 gemäß einem zweiten Ausführungsbeispiel der Erfindung. Das zweite Ausführungsbeispiel entspricht im Wesentlichen dem ersten Ausführungsbeispiel der Figuren 1 bis 9, mit dem Unterschied einer alternativen Ausgestaltung des Flansches 44 der Hülsen 41, 42. Im zweiten Ausführungsbeispiel der Figur 10 ist der Flansch 44 der Hülse 42 zweiteilig ausgebildet und umfasst einen Grundkörper 44a und einen Einlegeelement 44b. Der Grundkörper 44a ist gemeinsam mit dem Schaft 43 der Hülse 42 als ein einstückiges Bauteil ausgebildet. Das Einlegeelement 44b ist als Ring ausgebildet und konzentrisch zur Hülsenöffnung der Hülse 42 ausgebildet und in einer Nut 44g des Grundkörpers 44a angeordnet. Dabei wird das Einlegeelement 44b mittels eines axialen Formschlusses 44f in der Nut 44g gehalten. Der axiale Formschluss 44f kann beispielsweise durch Verstemmen, das heißt Umformen, von Teilbereichen des Grundkörpers 44a hergestellt sein. Die Formschlusselemente 41c sind dabei im zweiten Ausführungsbeispiel ausschließlich auf dem Einlegeelement 44b angeordnet und als ein Teil von diesem ausgebildet.

Das Einlegeelement 44b ist dabei aus einem gehärteten Stahl ausgebildet, der eine signifikant höhere Härte als das Material von Grundkörper 44a und Schaft 43 aufweist. Damit kann eine besonders hohe Robustheit und damit dauerhaft zuverlässige Funktion der Formschlusselemente 41c sichergestellt werden. Zudem wird durch die zweiteilige Ausgestaltung des Flansches 44 ermöglicht, dass Grundkörper 44a und Schaft 43 aus einem Stahl gebildet werden können, der sich gut für eine Kaltumformung eignet. Dadurch können die Hülsen 41, 42 auf besonders einfache und kostengünstige Weise hergestellt werden.

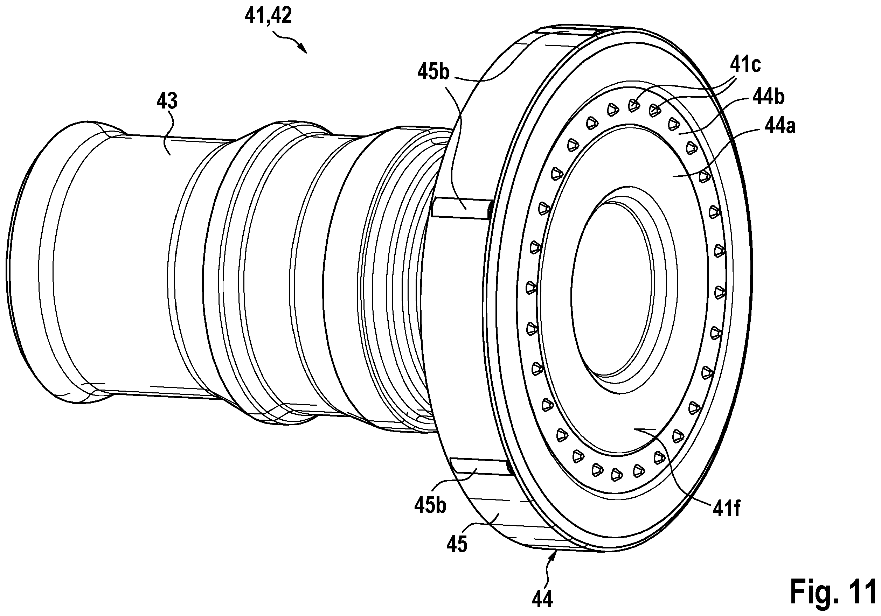

Die Hülse 41, 42 des zweiten Ausführungsbeispiels der Figur 10 ist in perspektivischer Ansicht in Figur 11 dargestellt. Wie in Figur 11 zu erkennen, umfasst das Dämpfungselement 45 der Hülse 41, 42 am Bereich radial außerhalb des Flansches 44 mehrere Vorsprünge 45b, die jeweils als sich in axialer Richtung erstreckender Rippe, die nach radial außen vorsteht, ausgebildet sind. Diese Vorsprünge 45b sind gleichmäßig um den Umfang der Hülse 41, 42 verteilt angeordnet. Mittels der Vorsprünge 45b lässt sich der Adapter 6 einerseits einfach von Hand auf den Flansch 44 der Hülse 41, 42 aufschieben. Andererseits bewirken die Vorsprünge 45b eine leichte Verpressung, sodass der Adapter 6 während des Montagevorgangs gegen ein unabsichtliches Herunterfallen von der Hülse 41, 42 gesichert ist.

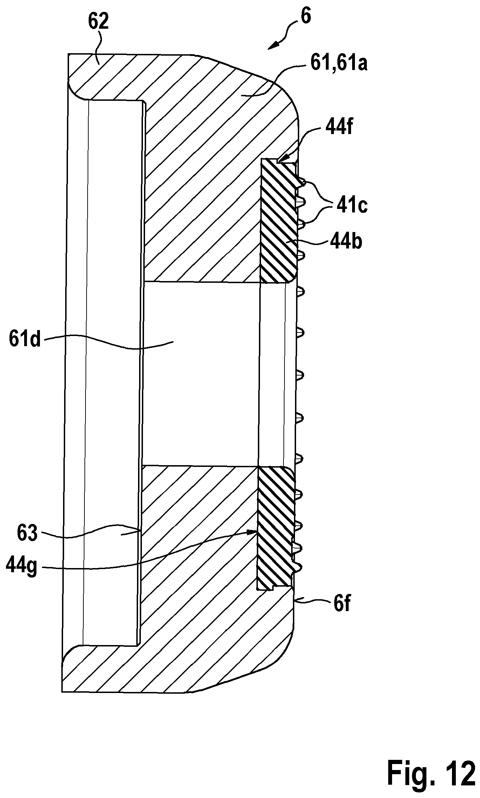

Figur 12 zeigt eine Detail-Schnittansicht einer Antriebsanordnung 1 gemäß einem dritten Ausführungsbeispiel der Erfindung. Das dritte Ausführungsbeispiel entspricht im Wesentlichen dem ersten Ausführungsbeispiel der Figuren 1 bis 9, mit dem Unterschied einer alternativen Ausgestaltung des Adapters 6. Im dritten Ausführungsbeispiel der Figur 12 ist der Adapter 6 zweiteilig ausgebildet, im Wesentlichen analog dem Flansch 44 der Hülse 42 der Figuren 10 und 11. Der Adapter 6 umfasst dabei einen Grundkörper 61a, welcher dem Grundbereich 61 entspricht, und welcher als ein einstückiges Bauteil ausgebildet ist, und ein Einlegeelement 44b. Das Einlegeelement 44b ist konzentrisch zur Durchgangsöffnung 61d ausgebildet und in einer Aussparung 44g des Grundkörpers 61a angeordnet. Die Aussparung 44g sowie das Einlegeelement 44b erstrecken sich dabei bis unmittelbar an die Durchgangsöffnung 61d angrenzend. Analog dem zweiten Ausführungsbeispiel der Figuren 10 und 11 wird das Einlegeelement 44b mittels eines axialen Formschlusses 44f in der Aussparung 44g gehalten, beispielsweise durch Verstemmen von Teilbereichen des Grundkörpers 44a. Die Formschlusselemente 41c sind im dritten Ausführungsbeispiel ausschließlich auf dem Einlegeelement 44b angeordnet und als ein Teil von diesem ausgebildet.

Besonders vorteilhaft ist eine Kombination aus zweitem Ausführungsbeispiel und dritten Ausführungsbeispiel.

Der Adapter 6 kann im dritten Ausführungsbeispiel aus Aluminium ausgebildet sein, um eine besonders leichtgewichtige, einfach herzustellende und kostengünstige Konstruktion zu ermöglichen. Dabei kann die Adapter-Innenseite 63 im Unterschied zum ersten Ausführungsbeispiel ohne Aussparungen 64 (vgl. Figur 4 und 5) ausgebildet sein. Durch das weichere Material des Adapters 6 können sich dabei die Formschlusselemente 41c leicht in den Adapter 6 an der Adapter-Innenseite 63 eingraben, wodurch in dieser Kontaktebene ein zusätzlicher Formschluss bereitgestellt wird, um eine besonders präzise und rutschsichere Verbindung zwischen Hülse 41, 42 und Adapter 6 bereitstellen zu können.

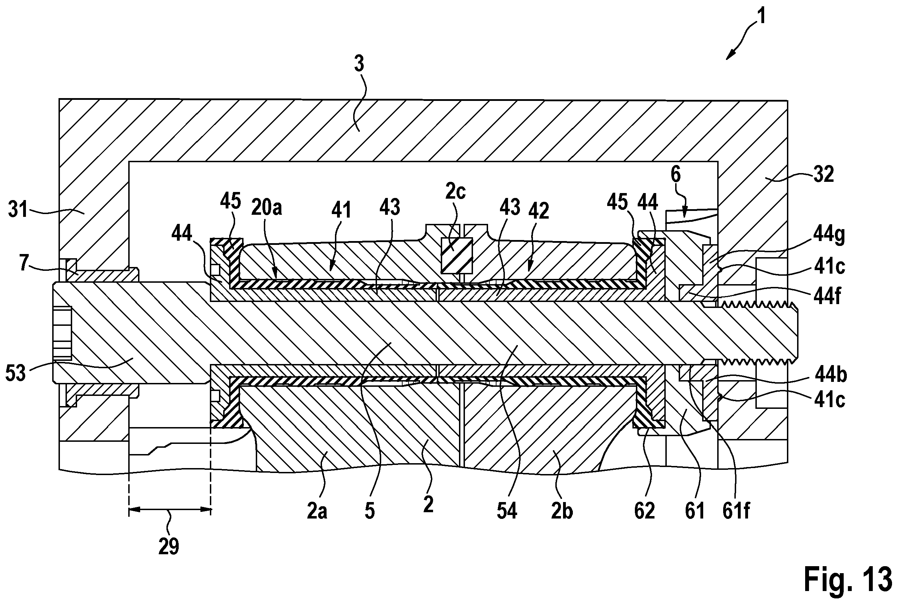

Figur 13 zeigt eine Schnittansicht einer Antriebsanordnung 1 gemäß einem vierten Ausführungsbeispiel der Erfindung. Das vierte Ausführungsbeispiel entspricht im Wesentlichen dem dritten Ausführungsbeispiel der Figur 12, mit dem Unterschied einer alternativen Ausgestaltung des Adapter 6. Im vierten Ausführungsbeispiel der Figur 12 ist das Einlegeelement 44 b des Adapters 6 als Hülse ausgebildet, die einen Adapterschaft 44 f und einen Adapterflansch 44 g aufweist. Der Adapterschaft ist dabei in eine Durchgangsöffnung 61 f des Grundkörpers 61 a des Adapter 6 eingesteckt und vorzugsweise mittels einer Pressverbindung fixiert. Die Formschlusselemente 41 c sind dabei am Adapterflansch 44 g angeordnet. Dadurch kann eine besonders einfache und kostengünstige Herstellung des Adapter 6 ermöglicht werden. Zudem kann durch eine vergrößerte Kontaktfläche zwischen Einlegeelement 44 b und Grundkörper 61 a eine optimierte Kraftübertragung und -Verteilung bereitgestellt werden.

Ferner ist im vierten Ausführungsbeispiel der Figur 13 nur auf der Festlager-Seite der zweiten Wand 32 ein Adapter 6 vorgesehen, wobei die Loslager-Seite der ersten Wand 31 adapterlos ist. Eine entsprechende Längenausgleich erfolgt dabei durch einen verlängerten Bolzenkopf 53 des Befestigungselements 5.dadurch kann ein besonders einfacher und kostengünstiger Aufbau der Antriebsanordnung 1 bereitgestellt werden.

## Patentansprüche

1. Antriebsanordnung eines mit Muskelkraft und/oder Motorkraft betreibbaren Fahrzeugs, umfassend:
- eine Antriebseinheit (2) mit zumindest einem Befestigungsbereich (91),
- wobei die Antriebseinheit (2) am Befestigungsbereich (91) zwei gegenüberliegende Öffnungen (20a, 20b) aufweist, welche sich entlang einer Befestigungsachse (25) erstrecken,
- jeweils eine Hülse (41, 42) pro Öffnung (20a, 20b),
- wobei jede Hülse (41, 42) in die entsprechende Öffnung (20a, 20b) eingesteckt ist, und
- ein Adapter (6), welcher auf zumindest einer der Hülsen (41, 42) angeordnet ist, und eingerichtet ist zur Verbreiterung der Antriebseinheit (2) entlang der Richtung der Befestigungsachse (25),
**dadurch gekennzeichnet, dass** der Adapter (6) einen Haltebereich (62) aufweist, der den Flansch (44) der Hülse (41, 42) umgibt.

2. Antriebsanordnung nach Anspruch 1, wobei jeweils ein Adapter (6) pro Hülse (41, 42) vorgesehen ist.

3. Antriebsanordnung nach Anspruch 1 oder 2,
- wobei jede Hülse (41, 42) einen Schaft (43) und einen Flansch (44) aufweist,
- wobei der Schaft (43) zumindest teilweise innerhalb der entsprechenden Öffnung (20a, 20b) der Antriebseinheit (2) angeordnet ist, und
- wobei der Flansch (44) außerhalb der Öffnung (20a, 20b) angeordnet ist, und
- wobei der Adapter (6) an einer dem Schaft (43) gegenüberliegenden Flansch-Außenseite (41f) des Flansches (44) angeordnet ist.

4. Antriebsanordnung nach einem der vorhergehenden Ansprüche, wobei der Adapter (6) einen scheibenförmigen Grundbereich (61) aufweist, der an der Flansch-Außenseite (41f) des Flansches (44) der Hülse (41, 42) anliegt.

5. Antriebsanordnung nach Anspruch 1-4, wobei zwischen dem Haltebereich (62) und dem Flansch (44) eine Pressverbindung (62a) ausgebildet ist.

6. Antriebsanordnung nach einem der vorhergehenden Ansprüche,
- wobei jede Hülse (41, 42) ein Dämpfungselement (45) aufweist, welches an einer der Antriebseinheit (2) zugewandten Seite des Flansches (44) und an einer radial äußeren Seite des Flansches (44) angeordnet ist, und
- wobei das Dämpfungselement (45) aus einem schwingungsdämpfenden Material gebildet ist,
- insbesondere wobei das Dämpfungselement (45) zusätzlich den Schaft (43) zumindest teilweise umgibt.

7. Antriebsanordnung nach einem der vorhergehenden Ansprüche, wobei der Adapter (6) an einer der Hülse (41, 42) abgewandten Adapter-Außenseite (6f) eine Vielzahl an vorstehenden Formschlusselementen (41c) aufweist, insbesondere wobei die Formschlusselemente (41c) so ausgebildet sind, um sich bei einer Verschraubung der Antriebseinheit (2) mit einer Wand (31, 32) in die Wand (31, 32) einzudrücken.

8. Antriebsanordnung nach einem der Ansprüche 3 bis 6, wobei der Flansch (44) jeder Hülse (41, 42) an der dem Schaft (43) abgewandten Flansch-Außenseite (41f) eine Vielzahl an vorstehenden Formschlusselementen (41c) aufweist.

9. Antriebsanordnung nach einem der vorhergehenden Ansprüche,
- wobei der Adapter (6) zweiteilig ausgebildet ist und einen Grundkörper (61a) und ein Einlegeelement (44b) umfasst, und
- wobei die Formschlusselemente (41c) am Einlegeelement (44b) angeordnet sind.

10. Antriebsanordnung nach Anspruch 9, wobei das Einlegeelement (44b) als Hülse ausgebildet ist und einen Adapterschaft (44f) und einen Adapterflansch (44g) aufweist, wobei der Adapterschaft (44f) in eine Durchgangsöffnung (61f) des Grundkörpers (61a) eingesteckt ist, und wobei die Formschlusselemente (41c) am Adapterflansch (44g) angeordnet sind.

11. Antriebsanordnung nach einem der vorhergehenden Ansprüche,
- wobei der Flansch (44) zweiteilig ausgebildet ist und einen Grundkörper (44a) und ein Einlegeelement (44b) umfasst, und
- wobei die Formschlusselemente (41c) am Einlegeelement (44b) angeordnet sind

12. Antriebsanordnung nach einem der Ansprüche 9 oder 11, wobei das Einlegeelement (44b) in einer Aussparung (44c) des Grundkörpers (61a, 44a) angeordnet ist, und insbesondere wobei das Einlegeelement (44b) mittels eines axialen Formschlusses in der Aussparung (44c) gehalten ist.

13. Antriebsanordnung nach einem der Ansprüche 9 bis 12, wobei der Grundkörper (44a) und das Einlegeelement (44b) aus unterschiedlichen Materialien gebildet sind, insbesondere wobei das Einlegeelement (44b) eine größere Härte als der Grundkörper (61a, 44a) aufweist.

14. Antriebsanordnung nach einem der Ansprüche 7 bis 13, wobei der Adapter (6) an einer der Hülse (41, 42) zugewandten Adapter-Innenseite (63) mindestens eine Ausnehmung (64) aufweist, die eingerichtet ist, um die vorstehenden Formschlusselemente (41c) des Flansches (44) der Hülse (41, 42) aufzunehmen, insbesondere wobei die mindestens eine Ausnehmung (64) als eine Ringnut ausgebildet ist.

15. Antriebsanordnung nach einem der Ansprüche 7 bis 14,
- wobei jedes Formschlusselement (41c) eine vorstehende Pyramide (41d) oder einen Kegel aufweist,
- insbesondere wobei jedes Formschlusselement (41c) eine an die Pyramide (41d) oder den Kegel angrenzende Vertiefung (41e) aufweist.

16. Antriebsanordnung nach einem der vorhergehenden Ansprüche, ferner umfassend eine Rahmenschnittstelle (3) mit einer ersten Wand (31) und einer zweiten Wand (32),
- wobei die Antriebseinheit (2) zumindest teilweise zwischen der ersten Wand (31) und der zweiten Wand (32) angeordnet ist, und
- wobei die Antriebseinheit (2) mittels zumindest eines Befestigungselements (5) und mittels der Hülsen (41, 42) an jeder der beiden Wände (31, 32) gehalten ist.

17. Antriebsanordnung nach Anspruch 16,
- wobei das Befestigungselement (5) an der zweiten Wand (32) befestigt ist, und
- wobei das Befestigungselement (5) an der ersten Wand (31) axial beweglich gehalten ist.

18. Antriebsanordnung nach Anspruch 17, wobei das Befestigungselement (5) die beiden Hülsen (41, 42) und den Adapter (6) gegen die zweite Wand (32) verspannt.

19. Antriebsanordnung nach einem der Ansprüche 16 bis 18, wobei das Befestigungselement (5) einen Bolzen umfasst mit einem Bolzenkopf (53) und einem Bolzenschaft (54), und wobei der Bolzenkopf (53) derart ausgebildet ist, um einen Spalt (29) zwischen der ersten Wand (31) und der ersten Hülse (41) oder zwischen der ersten Wand (31) und dem Adapter (6) zu überbrücken.

20. Antriebsanordnung nach einem der Ansprüche 16 bis 19,
- wobei die Antriebseinheit (2) mittels zwei Befestigungsbereichen (91, 92) an den Wänden (31, 32) der Rahmenschnittstelle (3) gehalten ist, und
- wobei an genau einem oder an beiden Befestigungsbereichen (91, 92) Adapter (6) vorgesehen sind.

21. Antriebsanordnung nach Anspruch 20,
- wobei eine Breite der Rahmenschnittstelle (3) zwischen der ersten Wand (31) und der zweiten Wand (32) an einem ersten Befestigungsbereich (91) größer als an einem zweiten Befestigungsbereich (92) ist, und
- wobei die Adapter (6) am ersten Befestigungsbereich (91) angeordnet sind.

22. Antriebsanordnung nach einem der vorhergehenden Ansprüche, wobei der Adapter (6) derart formstabil ausgebildet ist, dass eine Dicke (61c) des Adapters (6) ein festes Maß aufweist.

23. Fahrzeug, insbesondere mit Muskelkraft und/oder Motorkraft betreibbares Fahrzeug, vorzugsweise Elektrofahrrad, umfassend eine Antriebsanordnung (1) nach einem der vorhergehenden Ansprüche.

## Claims

1. Drive arrangement of a vehicle which is operable by muscle power and/or motor power, comprising:
- a drive unit (2) which has at least one fastening region (91),
- wherein, at the fastening region (91), the drive unit (2) has two oppositely situated openings (20a, 20b) which extend along a fastening axis (25),
- a respective sleeve (41, 42) for each opening (20a, 20b),
- wherein each sleeve (41, 42) is plugged into the corresponding opening (20a, 20b), and
- an adaptor (6) which is arranged on at least one of the sleeves (41, 42) and is configured for widening the drive unit (2) along the direction of the fastening axis (25),
**characterized in that** the adaptor (6) has a holding region (62) which surrounds the flange (44) of the sleeve (41, 42).

2. Drive arrangement according to Claim 1, wherein a respective adaptor (6) is provided for each sleeve (41, 42).

3. Drive arrangement according to Claim 1 or 2,
- wherein each sleeve (41, 42) has a shaft (43) and a flange (44),
- wherein the shaft (43) is arranged at least partially within the corresponding opening (20a, 20b) of the drive unit (2), and
- wherein the flange (44) is arranged outside the opening (20a, 20b), and
- wherein the adaptor (6) is arranged on a flange outer side (41f), situated opposite the shaft (43), of the flange (44).

4. Drive arrangement according to one of the preceding claims, wherein the adaptor (6) has a disc-shaped base region (61) which abuts against the flange outer side (41f) of the flange (44) of the sleeve (41, 42).

5. Drive arrangement according to Claim 1-4, wherein a pressing connection (62a) is formed between the holding region (62) and the flange (44).

6. Drive arrangement according to one of the preceding claims,
- wherein each sleeve (41, 42) has a damping element (45) which is arranged on a side of the flange (44) that faces towards the drive unit (2) and on a radially outer side of the flange (44), and
- wherein the damping element (45) is formed from an oscillation-damping material,
- in particular wherein the damping element (45) additionally at least partially surrounds the shaft (43).

7. Drive arrangement according to one of the preceding claims, wherein the adaptor (6) has a multiplicity of projecting form-fit elements (41c) on an adaptor outer side (6f), which faces away from the sleeve (41, 42), in particular wherein the form-fit elements (41c) are configured so as to be pressed into a wall (31, 32) when the drive unit (2) is screw-connected to the wall (31, 32).

8. Drive arrangement according to one of Claims 3 to 6, wherein the flange (44) of each sleeve (41, 42) has a multiplicity of projecting form-fit elements (41c) on the flange outer side (41f), which faces away from the shaft (43).

9. Drive arrangement according to one of the preceding claims,
- wherein the adaptor (6) is formed in two parts and comprises a base body (61a) and an insert element (44b), and
- wherein the form-fit elements (41c) are arranged on the insert element (44b).

10. Drive arrangement according to Claim 9, wherein the insert element (44b) is in the form of a sleeve and has an adaptor shaft (44f) and an adaptor flange (44g), wherein the adaptor shaft (44f) is plugged into a through-opening (61f) of the base body (61a), and wherein the form-fit elements (41c) are arranged on the adaptor flange (44g).

11. Drive arrangement according to one of the preceding claims,
- wherein the flange (44) is formed in two parts and comprises a base body (44a) and an insert element (44b), and
- wherein the form-fit elements (41c) are arranged on the insert element (44b).

12. Drive arrangement according to either of Claims 9 and 11, wherein the insert element (44b) is arranged in a recess (44c) of the base body (61a, 44a), and in particular wherein the insert element (44b) is held in the recess (44c) by means of an axial form fit.

13. Drive arrangement according to one of Claims 9 to 12, wherein the base body (44a) and the insert element (44b) are formed from different materials, in particular wherein the insert element (44b) has a greater hardness than the base body (61a, 44a).

14. Drive arrangement according to one of Claims 7 to 13, wherein the adaptor (6) has at least one indentation (64) on an adaptor inner side (63), which faces towards the sleeve (41, 42), which at least one indentation is configured for receiving the projecting form-fit elements (41c) of the flange (44) of the sleeve (41, 42), in particular wherein the at least one indentation (64) is in the form of an annular groove.

15. Drive arrangement according to one of Claims 7 to 14,
- wherein each form-fit element (41c) has a projecting pyramid (41d) or a cone,
- in particular wherein each form-fit element (41c) has a depression (41e) which is adjacent to the pyramid (41d) or the cone.

16. Drive arrangement according to one of the preceding claims, further comprising a frame interface (3) which has a first wall (31) and has a second wall (32),
- wherein the drive unit (2) is arranged at least partially between the first wall (31) and the second wall (32), and
- wherein the drive unit (2) is held on each of the two walls (31, 32) by means of at least one fastening element (5) and by means of the sleeves (41, 42).

17. Drive arrangement according to Claim 16,
- wherein the fastening element (5) is fastened to the second wall (32), and
- wherein the fastening element (5) is held in an axially movable manner on the first wall (31).

18. Drive arrangement according to Claim 17, wherein the fastening element (5) braces the two sleeves (41, 42) and the adaptor (6) against the second wall (32).

19. Drive arrangement according to one of Claims 16 to 18, wherein the fastening element (5) comprises a bolt with a bolt head (53) and with a bolt stem (54), and wherein the bolt head (53) is configured so as to bridge a gap (29) between the first wall (31) and the first sleeve (41) or between the first wall (31) and the adaptor (6).

20. Drive arrangement according to one of Claims 16 to 19,
- wherein the drive unit (2) is held on the walls (31, 32) of the frame interface (3) by means of two fastening regions (91, 92), and
- wherein adaptors (6) are provided at exactly one or at both fastening regions (91, 92).

21. Drive arrangement according to Claim 20,
- wherein a width of the frame interface (3) between the first wall (31) and the second wall (32) at a first fastening region (91) is greater than at a second fastening region (92), and
- wherein the adaptors (6) are arranged at the first fastening region (91).

22. Drive arrangement according to one of the preceding claims, wherein the adaptor (6) is designed to be dimensionally stable in such a way that a thickness (61c) of the adaptor (6) is fixed.

23. Vehicle, in particular a vehicle which is operable by muscle power and/or motor power, preferably an electric bicycle, comprising a drive arrangement (1) according to one of the preceding claims.

## Revendications

1. Agencement d'entraînement d'un véhicule pouvant fonctionner à l'aide d'une force musculaire et/ou d'une puissance motrice, comprenant :
- une unité d'entraînement (2) avec au moins une zone de fixation (91),
- où l'unité d'entraînement (2) présente, sur la zone de fixation (91), deux ouvertures opposées (20a, 20b) qui s'étendent le long d'un axe de fixation (25),
- un manchon (41, 42) par ouverture (20a, 20b),
- où chaque manchon (41, 42) est inséré dans l'ouverture correspondante (20a, 20b), et
- un adaptateur (6) disposé sur au moins un des manchons (41, 42) et adapté pour élargir l'unité d'entraînement (2) le long de la direction de l'axe de fixation (25),
**caractérisé en ce que** l'adaptateur (6) présente une zone de maintien (62) entourant la bride (44) du manchon (41, 42).

2. Agencement d'entraînement selon la revendication 1, où un adaptateur (6) par manchon (41, 42) est prévu.

3. Agencement d'entraînement selon la revendication 1 ou 2,
- où chaque manchon (41, 42) présente une tige (43) et une bride (44),
- où la tige (43) est agencée au moins partiellement à l'intérieur de l'ouverture correspondante (20a, 20b) de l'unité d'entraînement (2), et
- où la bride (44) est agencée à l'extérieur de l'ouverture (20a, 20b), et
- où l'adaptateur (6) est agencé sur un côté extérieur de bride (41f) opposé à la tige (43) de la bride (44).

4. Agencement d'entraînement selon l'une des revendications précédentes, où l'adaptateur (6) présente une zone de base en forme de disque (61), qui s'applique contre le côté extérieur de bride (41f) de la bride (44) du manchon (41, 42).

5. Agencement d'entraînement selon les revendications 1 à 4, où un raccord pressé (62a) est formé entre la zone de maintien (62) et la bride (44).

6. Agencement d'entraînement selon l'une des revendications précédentes,
- où chaque manchon (41, 42) présente un élément d'amortissement (45), agencé sur un côté de la bride (44) face à l'unité d'entraînement (2) et sur un côté radialement extérieur de la bride (44), et
- où l'élément d'amortissement (45) est formé d'un matériau amortissant les vibrations,
- en particulier, où l'élément d'amortissement (45) entoure en plus la tige (43) au moins partiellement.

7. Agencement d'entraînement selon l'une des revendications précédentes, où l'adaptateur (6) présente, sur un côté extérieur d'adaptateur (6f) détourné du manchon (41, 42), une pluralité d'éléments de complémentarité de forme saillants (41c), où les éléments de complémentarité de forme (41c) sont notamment conçus pour s'enfoncer dans la paroi (31, 32) lors d'un vissage de l'unité d'entraînement (2) avec une paroi (31, 32).

8. Agencement d'entraînement selon l'une des revendications 3 à 6, où la bride (44) de chaque manchon (41, 42) présente sur le côté extérieur de bride (41f) détourné de la tige (43) une pluralité d'éléments de complémentarité de forme saillants (41c).

9. Agencement d'entraînement selon l'une des revendications précédentes,
- où l'adaptateur (6) est formé en deux parties et comprend un corps de base (61a) et un élément d'insertion (44b), et
- où les éléments de complémentarité de forme (41c) sont agencés sur l'élément d'insertion (44b).

10. Agencement d'entraînement selon la revendication 9, où l'élément d'insertion (44b) est conçu comme un manchon et comporte une tige d'adaptateur (44f) et une bride d'adaptateur (44g), où la tige d'adaptateur (44f) est insérée dans une ouverture de passage (61f) du corps de base (61a), et où les éléments de complémentarité de forme (41c) sont disposés sur la bride d'adaptateur (44g).

11. Agencement d'entraînement selon l'une des revendications précédentes,
- où la bride (44) est formée en deux parties et comprend un corps de base (44a) et un élément d'insertion (44b), et
- où les éléments de complémentarité de forme (41c) sont disposés sur l'élément d'insertion (44b)

12. Agencement d'entraînement selon l'une des revendications 9 ou 11, où l'élément d'insertion (44b) est agencé dans une échancrure (44c) du corps de base (61a, 44a) et en particulier où l'élément d'insertion (44b) est maintenu dans l'échancrure (44c) au moyen d'une complémentarité de forme axiale.

13. Agencement d'entraînement selon l'une des revendications 9 à 12, où le corps de base (44a) et l'élément d'insertion (44b) sont constitués de matériaux différents, en particulier où l'élément d'insertion (44b) présente une dureté supérieure à celle du corps de base (61a, 44a).

14. Agencement d'entraînement selon l'une des revendications 7 à 13, où l'adaptateur (6) présente, sur un côté intérieur d'adaptateur (63) tourné vers le manchon (41, 42), au moins un évidement (64) qui est adapté pour recevoir les éléments de complémentarité de forme saillants (41c) de la bride (44) du manchon (41, 42), en particulier où l'au moins un évidement (64) est réalisé sous la forme d'une rainure annulaire.

15. Agencement d'entraînement selon l'une des revendications 7 à 14,
- où chaque élément de complémentarité de forme (41c) comporte une pyramide saillante (41D) ou un cône,
- en particulier, où chaque élément de complémentarité de forme (41c) présente un creux adjacent à la pyramide (41D) ou au cône (41e).

16. Agencement d'entraînement selon l'une des revendications précédentes, comprenant également une interface de cadre (3) avec une première paroi (31) et une deuxième paroi (32),
- où l'unité d'entraînement (2) est agencée au moins en partie entre la première paroi (31) et la deuxième paroi (32), et
- où l'unité d'entraînement (2) est maintenue sur chacune des deux parois (31, 32) au moyen d'au moins un élément de fixation (5) et au moyen des manchons (41, 42).

17. Agencement d'entraînement selon la revendication 16,
- où l'élément de fixation (5) est fixé à la deuxième paroi (32), et
- où l'élément de fixation (5) sur la première paroi (31) est maintenu axialement mobile.

18. Agencement d'entraînement selon la revendication 17, où l'élément de fixation (5) serre les deux manchons (41, 42) et l'adaptateur (6) contre la deuxième paroi (32).

19. Agencement d'entraînement selon l'une des revendications 16 à 18, où l'élément de fixation (5) comprenant un boulon avec une tête de boulon (53) et une tige de boulon (54), et où la tête de boulon (53) est conçue pour combler un écart (29) entre la première paroi (31) et le premier manchon (41) ou entre la première paroi (31) et l'adaptateur (6).

20. Agencement d'entraînement selon l'une des revendications 16 à 19,
- où l'unité d'entraînement (2) est maintenue au moyen de deux zones de fixation (91, 92) sur les parois (31, 32) de l'interface du cadre (3), et
- où des adaptateurs (6) sont prévus sur une ou les deux zones de fixation (91, 92).

21. Agencement d'entraînement selon la revendication 20,
- où une largeur de l'interface de cadre (3) entre la première paroi (31) et la deuxième paroi (32) sur une première zone de fixation (91) est supérieure à une deuxième zone de fixation (92), et
- où les adaptateurs (6) sont placés sur la première zone de fixation (91).

22. Agencement d'entraînement selon l'une des revendications précédentes, où l'adaptateur (6) est conçu sous forme stable de manière à ce qu'une épaisseur (61 c) de l'adaptateur (6) ait une cote fixe.

23. Véhicule, en particulier véhicule pouvant fonctionner à l'aide d'une force musculaire et/ou d'une puissance motrice, de préférence bicyclette électrique, comprenant un agencement d'entraînement (1) selon l'une des revendications précédentes.
